# FASCICULE DE BREVET EUROPEEN

(11) **EP 3 344 906 B1**
(45) Date de publication et mention de la délivrance du brevet: **29.04.2020**
(21) Numéro de dépôt: 16775271.6
(22) Date de dépôt: 29.08.2016
(51) Int. Cl.: F16L 37/086

(54) **DISPOSITIF DE CONNEXION D'AU MOINS UN TUYAU D'EVACUATION D'UN PRODUIT AVEC DES MOYENS DE RECEPTION DUDIT PRODUIT, PAR EXEMPLE ISSU D'UN APPAREIL D'EXTRACTION D'ACIDES NUCLEIQUES**
VORRICHTUNG ZUM VERBINDEN MINDESTENS EINER PRODUKTAUSGABELEITUNG MIT MITTELN ZUR AUFNAHME DES PRODUKTS, BEISPIELSWEISE AUS EINER VORRICHTUNG ZUR EXTRAKTION VON NUKLEINSÄUREN
DEVICE FOR CONNECTING AT LEAST ONE PRODUCT DISCHARGE PIPE TO MEANS FOR RECEIVING SAID PRODUCT, FOR EXAMPLE FROM AN APPARATUS FOR EXTRACTING NUCLEIC ACIDS

(30) Priorité: 04.09.2015 FR 1558202
(43) Date de publication de la demande: 11.07.2018
(73) Titulaire: Biomérieux, 69280 Marcy-L'Etoile (FR)
(72) Inventeur: LAZZARI, Giorgio, 55049 Viareggio (LU) (IT); MANCINI, Francesco, 50125 Firenze (FI) (IT); LABRINI, Paolo, 51100 Pistoia (PT) (IT)
(74) Mandataire: Schoen, Elsa Imilia
(86) Numéro de dépôt international: PCT/FR2016/052136
(87) Numéro de publication internationale: WO 2017/037373

(56) Documents cités:
- DE-A1-102005 029 061
- GB-A- 2 484 760
- US-A1- 2011 133 759

## Description

### DOMAINE TECHNIQUE

La présente invention se rapporte au secteur technique des appareils, notamment des appareils d'analyse de laboratoire, tels que par exemple ceux permettant l'extraction d'acides nucléiques, tels que des acides désoxyribonucléiques (ADN) et/ou des acides ribonucléiques (ARN), à partir d'échantillons biologiques.

L'invention concerne plus particulièrement un dispositif de connexion d'au moins un tuyau d'évacuation d'un produit issu d'un tel appareil d'analyse avec des moyens de réception dudit produit.

Par produit, on entend aussi bien un produit ou un mélange de produits gazeux, solides, tels que poudreux par exemple, ou se présentant sous forme liquide, visqueuse et/ou sous la forme d'éléments solides en suspension liquide. Un liquide au sens de la présente invention peut notamment présenter une matrice solide ou semi-solide, tels que des tissus, des échantillons respiratoires, des crachats, du pus ou des selles, en suspension dans un liquide.

Plus généralement, l'invention concerne un dispositif de connexion pouvant être mis en œuvre dans tout appareil, notamment d'analyse de laboratoire, comprenant au moins un tuyau d'évacuation d'un produit et des moyens de réception de ce produit. Par moyens de réception du produit, on entend par exemple des moyens de traitement aptes à réceptionner ledit produit et à le traiter, ou bien des moyens aptes à stocker ledit produit. Lesdits moyens de réception peuvent être de tout type approprié en fonction de la nature du produit évacué et ne sont aucunement limitatifs.

L'invention concerne également un appareil d'analyse équipé d'un tel dispositif de connexion, ainsi que des moyens de réception du produit évacué par un tel appareil d'analyse et équipés dudit dispositif de connexion.

### ETAT ANTERIEUR DE LA TECHNIQUE

Il est connu de l'état de la technique, notamment de GB2484760A, un appareil permettant l'extraction d'acides nucléiques à partir d'échantillons biologiques en effectuant notamment des opérations dites de « pipetage » consistant à prélever, au moyen d'une pipette automatisée, d'une part, les échantillons biologiques et, d'autre part, des réactifs chimiques.

Les échantillons biologiques manipulés sont sensibles à la contamination de sorte qu'il est impératif que cette collecte d'échantillons biologiques et réactifs soit effectuée d'une manière totalement étanche. Il en est de même pour l'évacuation desdits échantillons biologiques et réactifs liquides qui peuvent être sources de contamination pour les opérations d'analyses suivantes et l'environnement d'utilisation de l'appareil.

Plus précisément, l'appareil peut présenter plusieurs tuyaux d'évacuation des liquides, chaque tuyau évacuant les liquides provenant d'un moyen de pipetage automatisé distinct. Par exemple, deux tuyaux d'évacuation des échantillons biologiques et/ou des réactifs chimiques liquides peuvent être connectés de manière étanche par l'intermédiaire d'un dispositif de connexion à un bac de stockage.

Selon l'état de la technique, le dispositif de connexion présente une première pièce comprenant des moyens de connexion étanche aux deux tuyaux d'évacuation de l'appareil, et une deuxième pièce comprenant des moyens d'accouplement étanche avec le bac de stockage des liquides évacués.

Lesdites première et deuxième pièces sont accouplées de manière étanche entre elles et comprennent des moyens complémentaires permettant l'évacuation du liquide au travers desdites première et deuxième pièces, à partir du tuyau d'évacuation jusqu'au bac de stockage.

Pour permettre de confirmer l'accouplement correct et étanche entre les première et deuxième pièces du dispositif de connexion, deux aimants sont agencés sur l'une des pièces et sont destinés à être positionnés en regard de deux interrupteurs magnétiques agencés sur l'autre pièce lorsque celles-ci sont accouplées entre elles de manière étanche. Ainsi, lorsque les deux pièces sont accouplées de manière étanche, les aimants se trouvent à distance de détection des interrupteurs magnétiques, lesquels se ferment et transmettent un signal indiquant l'accouplement étanche entre les première et deuxième pièces.

Cependant, il a été constaté que, dans cette configuration du dispositif de connexion, il est possible de faire fonctionner l'appareil d'analyse alors que la deuxième pièce du dispositif de connexion n'est pas accouplée de manière étanche avec le bac de stockage des liquides.

Il s'ensuit que les liquides évacués peuvent s'écouler entre le bac de stockage et la deuxième pièce. Outre l'inconvénient lié à la fuite, cet écoulement peut entrainer un risque de contamination de la zone de pipetage, et fausser les opérations d'analyse suivantes.

### EXPOSE DE L'INVENTION

L'un des buts de l'invention est donc de remédier aux inconvénients précités en proposant un dispositif de connexion entre au moins un tuyau d'évacuation d'un produit, tel qu'un liquide, un gaz ou un solide, issu d'un appareil permettant d'effectuer des opérations d'analyse, telles que des opérations de pipetage pour l'extraction d'acides nucléiques, et des moyens de réception de ce produit, qui présente une étanchéité et une sécurité d'utilisation optimales, évitant tout risque de fuite de liquide et de contamination.

A cet effet, il a été mis au point un dispositif de connexion selon la revendication 1.

Lesdites première et deuxième pièces sont accouplées de manière étanche entre elles et comprennent des moyens complémentaires permettant l'évacuation du produit au travers desdites première et deuxième pièces, à partir du tuyau d'évacuation jusqu'aux moyens de réception.

Conformément à l'invention, la deuxième pièce comprend un capteur de position agencé pour être actionné lors de l'accouplement étanche aux moyens de réception.

De cette manière, lorsque le dispositif de connexion est accouplé de manière étanche avec les moyens de réception du produit, le capteur est actionné et transmet un signal à un utilisateur pour lui indiquer l'accouplement étanche. Les risques de fuite et de contamination sont évités, le dispositif de connexion ne peut pas être utilisé alors que l'accouplement avec les moyens de réception n'est pas effectué de manière étanche.

Les moyens de réception du produit peuvent être de tout type approprié en fonction de la nature du produit évacué tels que par exemple des moyens de traitement aptes à réceptionner ledit produit et à le traiter, ou bien des moyens aptes à stocker ledit produit tel qu'un bac de stockage dudit produit.

L' actionnement du capteur entraine son déplacement dans une position de détection de l'accouplement étanche de la première pièce avec la deuxième pièce.

De cette manière, l'invention permet, avec un seul capteur, de détecter à la fois, d'une part, l'accouplement étanche entre la deuxième pièce et les moyens de réception et, d'autre part, l'accouplement entre les deux pièces constitutives du dispositif de connexion.

La deuxième pièce comprend des moyens de déplacement d'un organe d'activation du capteur de position, à l'encontre d'un organe de détection dudit capteur de position, et notamment en direction dudit organe d'activation, permettant le passage de l'organe d'activation d'une position neutre jusqu'à une position de détection, lesdits moyens de déplacement étant actionnés lors de l'accouplement étanche aux moyens de réception.

L'organe de détection est agencé sur la première pièce de manière à ce que lorsque la deuxième pièce est accouplée de manière étanche aux moyens de réception, les moyens de déplacement déplacent l'organe d'activation en position de détection, à distance de détection dudit organe de détection.

Les moyens de déplacement se présentent sous la forme d'un ressort à lame agencé au niveau des moyens d'accouplement avec les moyens de réception, l'organe d'activation est monté sur la lame dudit ressort, et le ressort est agencé pour être comprimé lors de l'accouplement étanche aux moyens de réception de sorte à déplacer l'organe d'activation en position de détection.

Le ressort à lame présente, par exemple, une partie annulaire avec une lame s'étendant, intérieurement et depuis un bord, de préférence diamétralement, de manière à présenter une extrémité libre située à l'intérieur d'une zone définie par la partie annulaire du ressort, ladite extrémité libre recevant l'organe d'activation.

Dans cette configuration, la deuxième pièce comprend, par exemple, une partie mobile agencée au niveau des moyens d'accouplement avec les moyens de réception et destinée à être déplacée relativement en direction du ressort lors de l'accouplement étanche auxdits moyens de réception. La partie mobile comprend un épaulement annulaire dont le bord périphérique en regard avec le ressort est chanfreiné et est apte, lors du déplacement de la partie mobile, à venir en appui contre la partie annulaire du ressort à lame pour appliquer audit ressort une déformation concave, en contre-appui contre une partie d'appui annulaire ménagée sur la deuxième pièce et présentant la même pente que l'épaulement chanfreiné, afin que la lame du ressort déplace l'organe d'activation en position de détection.

Les organes d'activation et de détection du capteur peuvent être de tous types appropriés sans sortir du cadre de l'invention. Par exemple, l'organe d'activation se présente sous la forme d'au moins un aimant. Dans cette configuration particulière, l'organe de détection peut se présenter sous la forme d'au moins un interrupteur magnétique.

L'invention vise également à protéger un appareil, préférentiellement d'analyse de laboratoire, tel que par exemple un appareil permettant l'extraction d'acides nucléiques, évacuant un produit de manière étanche dans des moyens de réception dudit produit par l'intermédiaire d'au moins un tuyau d'évacuation.

Selon l'invention, l'appareil comprend un dispositif de connexion tel que décrit ci-avant, dont la première pièce est connectée de manière étanche au tuyau d'évacuation du produit.

De la même manière, l'invention vise à protéger l'appareil, préférentiellement d'analyse de laboratoire, comprenant un dispositif de connexion et des moyens de réception du produit évacué. Selon l'invention, le dispositif de connexion est conforme à celui décrit ci-avant, dont la première pièce est connectée de manière étanche au tuyau d'évacuation du produit et dont la deuxième pièce est accouplée de manière étanche aux moyens de réception.

Enfin, l'invention vise à protéger également les moyens de réception étanche d'un produit destiné à être évacué par au moins un tuyau d'un appareil, préférentiellement d'analyse de laboratoire. Selon l'invention, lesdits moyens de réception sont accouplés de manière étanche à la deuxième pièce d'un dispositif de connexion conforme à celui décrit ci-avant.

Selon des formes de réalisation particulières, les moyens de réception du produit évacué se présentent par exemple sous la forme de moyens de traitement, telle qu'une unité de traitement apte à traiter le produit évacué et réceptionné, ou bien se présentent par exemple sous la forme de moyens de stockage, tel qu'un bac de stockage définissant un volume fermé étanche et comprenant par exemple un goulot fileté.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une vue schématique en coupe longitudinale illustrant les première et deuxième pièces du dispositif selon l'invention accouplées de manière étanche entre elles, le plan de coupe passant par des conduits de raccord mâles et femelles dudit dispositif ;
- la figure 2 est une vue schématique en coupe longitudinale similaire à celle de la figure 1, le plan de coupe passant par les aimants du capteur de position, lesquels sont représentés en position de détection ;
- la figure 3 est une vue schématique en perspective découverte illustrant une première pièce d'un dispositif de connexion selon l'invention, connectée de manière étanche à deux tuyaux d'évacuation d'un appareil d'analyse par exemple ;
- la figure 4 est une vue schématique en perspective illustrant une deuxième pièce du dispositif de connexion selon l'invention, destinée à être accouplée de manière étanche aux moyens de réception d'un produit tel qu'un bac de stockage ;
- la figure 5 est une vue schématique similaire à celle de la figure 4, la deuxième pièce étant représentée en coupe longitudinale ;
- la figure 6 est une vue schématique similaire à celle de la figure 4, ladite deuxième pièce étant représentée sans bague de vissage ni couvercle ;
- la figure 7 est une vue schématique en perspective illustrant un ressort à lame mis en œuvre dans la deuxième pièce du dispositif selon l'invention ;
- la figure 8 est une vue schématique illustrant le positionnement du ressort à lame lorsque la deuxième pièce du dispositif selon l'invention n'est pas accouplée aux moyens de réception du produit ou que l'accouplement n'est pas réalisé entièrement et de manière étanche, l'organe d'activation du capteur étant en position neutre ;
- la figure 9 est une vue schématique similaire à celle de la figure 8, illustrant le positionnement du ressort à lame lorsque la deuxième pièce du dispositif selon l'invention est accouplée de manière étanche avec les moyens de réception, l'organe d'activation du capteur étant en position de détection.

### EXPOSE DETAILLE DE L'INVENTION

L'invention concerne un dispositif de connexion d'au moins un tuyau d'évacuation d'un produit avec des moyens de réception dudit produit.

Le dispositif de connexion peut être mis en œuvre dans toutes applications dans lesquelles il convient d'assurer une connexion étanche entre au moins un tuyau d'évacuation d'un produit et des moyens de réception.

L'invention est décrite ci-après en relation avec un appareil d'analyse, tel qu'un appareil permettant l'extraction d'acides nucléiques à partir d'échantillons biologiques et de réactifs chimiques, évacuant un produit sous forme liquide, dans des moyens de réception sous forme d'un bac de stockage définissant un volume fermé étanche et comprenant un goulot fileté.

L'appareil, bien connu de l'état de la technique, permet d'effectuer, de manière régulière et répétitive, des opérations de pipetage d'échantillons biologiques et de réactifs chimiques afin d'extraire l'ADN et/ou l'ARN contenu(s) dans les échantillons biologiques. Au cours de ces opérations de pipetage, les échantillons biologiques et réactifs liquides sont évacués par l'intermédiaire de deux tuyaux d'évacuation dans le bac de stockage, chaque tuyau évacuant les liquides d'un moyen de pipetage distinct.

L'évacuation de ces liquides doit impérativement se faire d'une manière étanche pour éviter toute contamination des opérations d'extraction et d'analyse suivantes effectuées par l'appareil.

A cet effet, l'appareil comprend un dispositif de connexion reliant d'une manière étanche les deux tuyaux au bac de stockage pour l'évacuation en tant que telle des liquides.

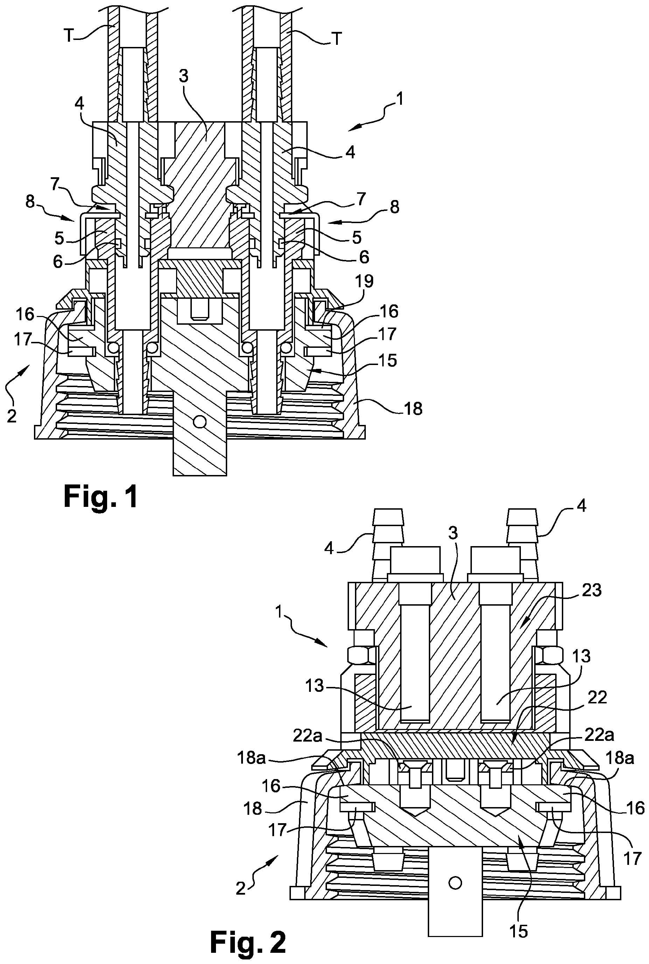

En référence aux figures 1 à 6, le dispositif de connexion comprend une première pièce (1) destinée à être connectée de manière étanche aux tuyaux d'évacuation (T), et une deuxième pièce (2) destinée, quant à elle, à être accouplée de manière étanche au bac de stockage (non représenté). Les deux pièces (1, 2) sont accouplées de manière étanche l'une à l'autre, notamment par encliquetage.

La première pièce (1) et la deuxième pièce (2) comprennent, en outre, des moyens complémentaires permettant l'évacuation du liquide au travers desdites première et deuxième pièces, à partir des tuyaux d'évacuation (T) jusqu'au bac de stockage.

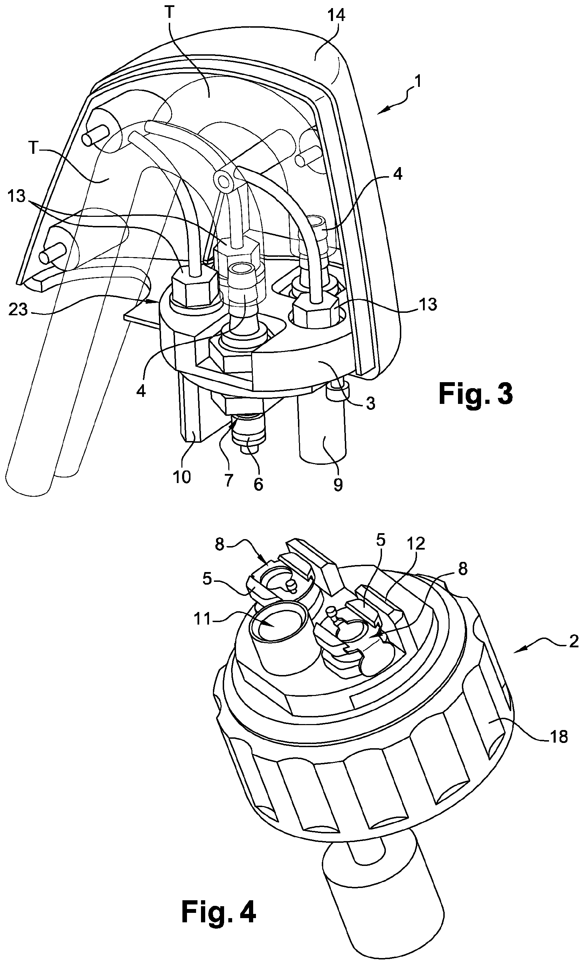

En référence à la figure 3, la première pièce (1) comprend une base (3), de forme générale cylindrique, traversée longitudinalement par deux conduits de raccord mâles (4) destinés à être emmanchés, d'une part, à l'intérieur des deux tuyaux (T) d'évacuation de liquide de l'appareil et, d'autre part, dans deux conduits de raccord femelles complémentaires (5) que présente la deuxième pièce (2), destinés à être en communication avec l'intérieur du bac de stockage.

Ces conduits de raccord mâles (4) comprennent chacun un joint torique (6) pour l'étanchéité et une gorge supérieure annulaire (7) pour l'encliquetage avec des moyens de verrouillage (8) de l'accouplement ménagés sur les conduits femelles (5) et aptes à venir s'engager dans lesdites gorges (7) pour le verrouillage en tant que tel. La première pièce (1) et la deuxième pièce (2) sont ainsi accouplées de manière étanche l'une à l'autre. Ces conduits de raccords mâles (4) et femelles (5) permettent le passage de manière étanche des produits liquides provenant des tuyaux d'évacuation (T) et leur évacuation au travers desdites première et deuxième pièces, jusqu'au bac de stockage.

La base (3) comprend, en outre, un doigt de guidage (9) et un méplat détrompeur (10) faisant tous deux saillies d'une paroi inférieure destinée à être en regard de la deuxième pièce (2).

En référence aux figures 1 et 2, l'accouplement entre la première pièce (1) et la deuxième pièce (2) est donc effectué par l'insertion des deux conduits de raccord mâles (4) dans les deux conduits de raccord femelles (5), et par l'insertion du doigt de guidage (9) dans un évidement cylindrique complémentaire (11) ménagé sur la deuxième pièce (2). Le méplat détrompeur (10) en saillie de la première pièce (1) coopère avec une partie plane complémentaire (12) de la deuxième pièce (2). Le doigt de guidage (9) et le méplat (10) permettent un accouplement optimal, sans risque d'erreur, et de manière guidée pour éviter de détériorer les joints toriques (6) des conduits de raccord mâles (4).

Trois interrupteurs magnétiques (13), bien connus de l'état de la technique, sont positionnés sur une paroi supérieure de la base (3). Ces interrupteur magnétiques (13) sont destinés à se fermer lorsqu'un organe magnétique est approché, à distance de détection, de l'autre côté de la base (3), au niveau de la paroi inférieure. Le raccordement électrique des interrupteurs magnétiques (13) est classique et bien connu de l'état de la technique de sorte qu'il ne sera pas décrit.

La base (3) de la première pièce (1) comprend un capot de protection (14) recouvrant les tuyaux d'évacuation (T) et leur raccordement aux conduits de raccord mâles (4).

En référence aux figures 4 à 6, la deuxième pièce (2) se présente, quant à elle, sous la forme d'un bouchon d'obturation du goulot fileté du bac de stockage. A cet effet, la deuxième pièce (2) comprend une partie d'obturation (15) de forme générale cylindrique, destinée à être insérée dans le goulot du bac et à l'obturer. Cette partie d'obturation (15) comprend un épaulement annulaire supérieur (16) présentant une partie inférieure pourvue d'un joint annulaire d'étanchéité (17). Ce joint annulaire d'étanchéité (17) est destiné à être en contact, après accouplement, avec le bord supérieur annulaire du goulot du bac.

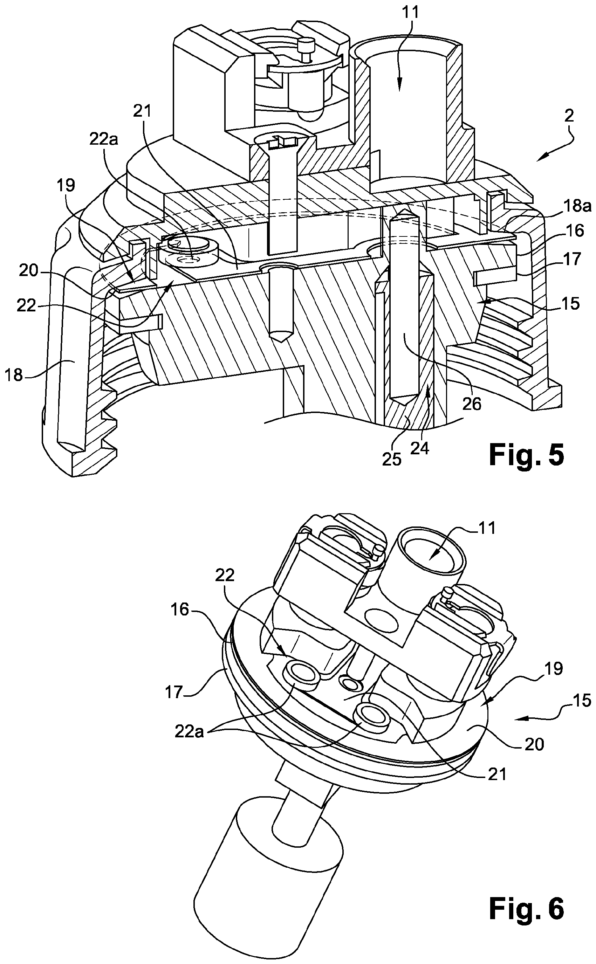

En référence aux figures 4 et 5, une bague de vissage (18) est agencée autour de la partie d'obturation (15) et est destinée à se visser autour du goulot du bac de stockage pour assurer un accouplement étanche, en combinaison avec le joint annulaire d'étanchéité (17) de la partie d'obturation (15).

En référence aux figures 5 et 6, un ressort à lame (19) est agencé entre une partie supérieure (18a) de la bague de vissage et l'épaulement annulaire (16) de la partie d'obturation (15).

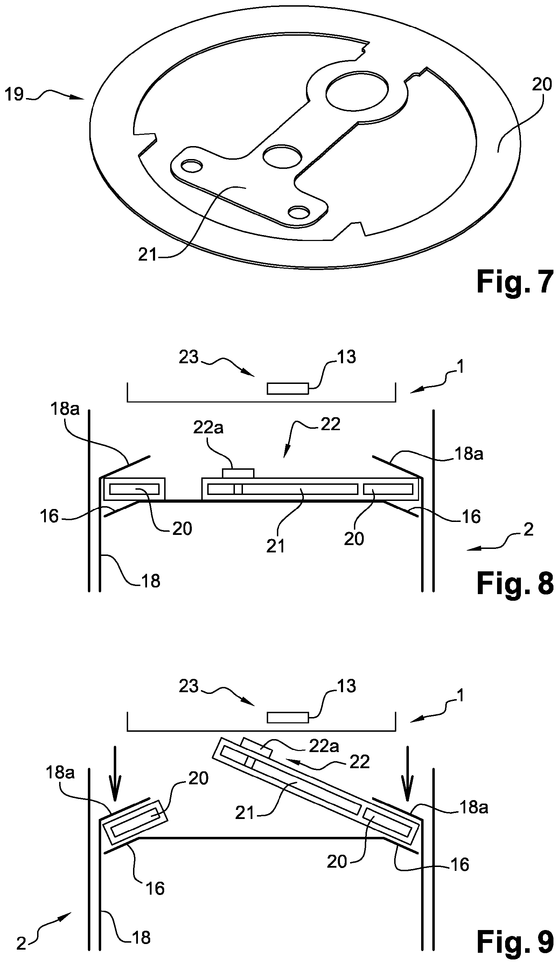

En référence à la figure 7, le ressort à lame (19) présente une partie annulaire (20) pourvue d'une lame (21) s'étendant intérieurement et depuis un bord, de préférence diamétralement, de manière à présenter une extrémité libre située à l'intérieur d'une zone définie par la partie annulaire (20) du ressort.

En référence aux figures 8 et 9, la partie annulaire (20) du ressort à lame (19) est prise en étau entre une partie supérieure (18a) de la bague de vissage (18) et l'épaulement annulaire (16) de la partie d'obturation (15). Le bord périphérique de l'épaulement (16), en regard avec le ressort, est chanfreiné. La partie supérieure de la bague de vissage (18) présente sensiblement la même pente que l'épaulement chanfreiné (16). De cette manière, un déplacement relatif de la partie d'obturation (15) en direction de la bague de vissage (18) permet de comprimer la partie annulaire (20) du ressort à lame (19) pour contraindre ledit ressort (19) à se déformer suivant les pentes inclinées et à prendre une forme concave de sorte à relever la lame (21). Ce déplacement relatif entre la bague de vissage (18) et la partie d'obturation (15) est atteint lorsque ladite bague de vissage (18) est vissée sur le goulot du bac de stockage qui vient en appui sur l'épaulement annulaire (16). Il en résulte que lorsque l'accouplement entre le bac de stockage et la deuxième pièce (2) est effectué de manière étanche, la lame (21) du ressort à lame (19) se trouve déplacée en direction de la première pièce (1).

Cela étant, la lame (21) du ressort à lame (19) reçoit un organe d'activation (22) d'un capteur de position. Cet organe d'activation (22) se présente par exemple sous la forme de deux aimants (22a) qui sont ainsi déplaçables à partir d'une position neutre (Figure 8) jusqu'à une position de détection (Figures 2 et 9) lorsque l'accouplement est réalisé de manière étanche entre le bac et le dispositif de connexion, correspondant notamment au relèvement de la lame (21) du ressort à lame (19).

L'organe d'activation (22) est déplaçable à l'encontre, notamment en direction d'un organe de détection (23) qui est notamment constitué par deux des trois interrupteurs magnétiques (13) agencés sur la première pièce (1) du dispositif de connexion. Le relèvement de la lame (21) permet de positionner les deux aimants (22a) en regard et à distance de détection des deux interrupteurs magnétiques (13) qui se ferment pour indiquer à un utilisateur l'accouplement étanche entre le bac de stockage et le dispositif de connexion.

L'invention fournit ainsi un dispositif de connexion comprenant un capteur de position présentant un organe d'activation (22) agencé sur la deuxième pièce (2) et déplaçable dans une position de détection seulement lorsque le dispositif est accouplé de manière étanche au bac de stockage, en direction et dans le champ de détection de l'organe de détection (23) qui est agencé sur la première pièce (1). De cette manière, la détection peut se faire uniquement si la première pièce (1) et la deuxième pièce (2) sont accouplées de manière étanche entre elles. En d'autres termes, avec un seul capteur l'invention permet de détecter à la fois, d'une part, l'accouplement étanche entre la deuxième pièce (2) et le bac de stockage et, d'autre part, l'accouplement entre les deux pièces (1, 2) constitutives du dispositif de connexion.

Le dispositif de connexion garantit ainsi une sécurité d'utilisation optimale puisque le dispositif est apte à avertir l'utilisateur lorsqu'il est accouplé de manière parfaitement étanche, ce qui permet d'éviter les risques de fuites et de contamination. D'une manière avantageuse, les interrupteurs magnétiques (13) de l'organe de détection (23) sont assujettis à l'appareil de sorte que celui-ci ne peut pas fonctionner tant que lesdits interrupteurs magnétiques (13) ne sont pas fermés, ce qui signifie que les accouplements ne sont pas étanches.

Pour garantir davantage une sécurité d'utilisation, le dispositif de connexion intègre un capteur de trop plein apte à signaler à l'utilisateur que le volume de liquide contenu dans le bac de stockage est supérieur à un seuil donné. A cet effet et en référence à la figure 5, la partie d'obturation (15) comprend un conduit cylindrique (24) longitudinal et non traversant. Le conduit (24) est ouvert du côté du bac de stockage et communique avec celui-ci. Ce conduit (24) reçoit de manière coulissante un flotteur (25) équipé d'un aimant (26) en partie supérieure. Cet aimant (26) est destiné à être positionné au droit du troisième interrupteur magnétique (13) de la première pièce (1) lorsque la première pièce (1) est accouplée avec la deuxième pièce (2). En pratique, le flotteur (25) coulisse dans le conduit cylindrique (24) en fonction du niveau du liquide à l'intérieur du bac, et est poussé en direction de l'interrupteur magnétique (13) de sorte que, lorsque le volume de liquide dans le bac dépasse un certain seuil, l'aimant se trouve à distance de détection de l'interrupteur magnétique (13) qui se ferme pour indiquer le trop plein.

## Revendications

1. Dispositif de connexion étanche d'au moins un tuyau d'évacuation (T) d'un produit avec des moyens de réception dudit produit, ledit dispositif comprenant :
- une première pièce (1) comprenant des moyens (4) de connexion étanche au tuyau (T);
- une deuxième pièce (2) comprenant des moyens (17,18) d'accouplement étanche avec les moyens de réception ;
lesdites première et deuxième pièces sont destinées à être accouplées de manière étanche entre elles et comprennent des moyens complémentaires (4, 5) permettant l'évacuation du produit au travers desdites première et deuxième pièces, à partir du tuyau d'évacuation (T) jusqu'aux moyens de réception, **caractérisé en ce que** la deuxième pièce (2) comprend un capteur de position, ledit capteur de position étant agencé pour être actionné lors de l'accouplement étanche aux moyens de réception,
et **en ce que** le capteur de position comprend un organe d'activation (22) agencé sur la deuxième pièce (2), ledit organe d'activation (22) étant déplaçable dans une position de détection seulement lorsque le dispositif de connexion est accouplé de manière étanche aux moyens de réception, en direction et dans le champ de détection d'un organe de détection (23) agencé sur la première pièce (1),
et **en ce que en ce que** la deuxième pièce (2) comprend des moyens de déplacement (19) de l'organe d'activation (22) du capteur de position, à l'encontre de l'organe de détection (23), permettant le passage de l'organe d'activation (22) d'une position neutre jusqu'à la position de détection, lesdits moyens de déplacement (19) étant actionnés lors de l'accouplement étanche de la deuxième pièce du dispositif de connexion aux moyens de réception,
et **en ce que** les moyens de déplacement se présentent sous la forme d'un ressort à lame (19) agencé au niveau des moyens d'accouplement (18) avec les moyens de réception, l'organe d'activation (22) est monté sur la lame (21) dudit ressort à lame, et le ressort (19) est agencé pour être comprimé lors de l'accouplement étanche aux moyens de réception de sorte à déplacer l'organe d'activation (22) en position de détection.

2. Dispositif de connexion selon la revendication 1, **caractérisé en ce que** l'actionnement du capteur entraine son déplacement dans une position de détection de l'accouplement étanche de la première pièce (1) avec la deuxième pièce (2).

3. Dispositif de connexion selon la revendication 1 ou 2, **caractérisé en ce que** l'organe de détection (23) est agencé sur la première pièce (1) de manière à ce que lorsque la deuxième pièce (2) est accouplée de manière étanche aux moyens de réception, les moyens de déplacement (19) déplacent l'organe d'activation (22) en position de détection, à distance de détection dudit organe de détection (23).

4. Dispositif de connexion selon la revendication 1 à 3, **caractérisé en ce que** le ressort à lame (19) présente une partie annulaire (20) avec une lame (21) s'étendant intérieurement depuis un bord, de manière à présenter une extrémité libre située à l'intérieur d'une zone définie par la partie annulaire (20) du ressort, ladite extrémité libre recevant l'organe d'activation (22).

5. Dispositif de connexion selon la revendication 4, **caractérisé en ce que** la deuxième pièce (2) comprend une partie mobile (15) agencée au niveau des moyens d'accouplement (18) avec les moyens de réception et destinée à être déplacée relativement en direction du ressort (19) lors de l'accouplement étanche auxdits moyens de réception, la partie mobile (15) comprend un épaulement annulaire (16) dont le bord périphérique en regard avec le ressort (19) est chanfreiné et est apte, lors du déplacement de la partie mobile (15), à venir en appui contre la partie annulaire (20) du ressort à lame (19) pour appliquer audit ressort (19) une déformation concave, en contre-appui contre une partie d'appui annulaire (18a) ménagée sur la deuxième pièce (2) et présentant la même pente que l'épaulement chanfreiné (16), afin que la lame (21) du ressort (19) déplace l'organe d'activation (22) en position de détection.

6. Dispositif de connexion selon l'une quelconque des revendications 1 à 5, **caractérisé en ce que** l'organe d'activation (22) se présente sous la forme d'au moins un aimant (22a).

7. Dispositif de connexion selon la revendication 6, **caractérisé en ce que** l'organe de détection (23) se présente sous la forme d'au moins un interrupteur magnétique (13).

8. Appareil, de préférence d'analyse de laboratoire, évacuant un produit par l'intermédiaire d'au moins un tuyau (T), ledit produit étant destiné à être récupéré, de manière étanche, dans des moyens de réception dudit produit, **caractérisé en ce qu'**il comprend un dispositif de connexion conforme à l'une quelconque des revendications 1 à 7, dont la première pièce (1) est connectée de manière étanche au tuyau d'évacuation (T) du produit.

9. Appareil, de préférence d'analyse de laboratoire, évacuant un produit de manière étanche dans des moyens de réception dudit produit par l'intermédiaire d'au moins un tuyau d'évacuation (T), **caractérisé en ce qu'**il comprend un dispositif de connexion conforme à l'une quelconque des revendications 1 à 7, dont la première pièce (1) est connectée de manière étanche au tuyau d'évacuation (T) du produit et dont la deuxième pièce (2) est accouplée de manière étanche aux moyens de réception.

10. Moyens de réception étanche d'un produit destiné à être évacué par au moins un tuyau (T) d'un appareil, préférentiellement d'analyse de laboratoire et dispositif selon les revendications 1 à 7, **caractérisés en ce que** lesdits moyens de réception du produit sont accouplés de manière étanche à la deuxième pièce (2) d'un dispositif de connexion conforme à l'une quelconque des revendications 1 à 7.

11. Moyens de réception étanche d'un produit et dispositif selon la revendication 10, **caractérisés en ce qu'**ils se présentent sous la forme d'une unité de traitement apte à traiter le produit évacué et réceptionné.

12. Moyens de réception étanche d'un produit et dispositif selon la revendication 10, **caractérisés en ce qu'**ils se présentent sous la forme d'un bac de stockage du produit définissant un volume fermé étanche et comprenant un goulot fileté.

## Patentansprüche

1. Verbindunsvorrichtung zum dichten Verbinden von mindestens einem Ableitungsrohr (T) eines Produkts mit Mitteln zum Aufnehmen des Produkts, wobei die Vorrichtung Folgendes aufweist:
- ein erstes Teil (1), das Mittel (4) für ein dichtes Verbinden mit dem Rohr (T) aufweist;
- ein zweites Teil (2), das Mittel (17, 18) für ein dichtes Koppeln mit den Mitteln zum Aufnehmen aufweist;
wobei das erste und das zweite Teil dazu dienen, dicht miteinander gekoppelt zu werden, und ergänzende Mittel (4, 5) aufweisen, die die Ableitung des Produkts durch das erste und das zweite Teil ermöglichen, ausgehend vom Ableitungsrohr (T) bis zu den Mitteln zum Aufnehmen,
**dadurch gekennzeichnet, dass** das zweite Teil (2) einen Positionssensor aufweist, der so angeordnet ist, dass er während des dichten Koppelns mit den Mitteln zum Aufnehmen betätigt wird,
und dadurch, dass der Positionssensor ein Aktivierungsorgan (22) aufweist, das auf dem zweiten Teil (2) angeordnet ist, wobei das Aktivierungsorgan (22) nur dann in eine Erkennungsposition verschiebbar ist, wenn die Verbindungsvorrichtung dicht mit den Mitteln zum Aufnehmen gekoppelt ist, in Richtung und im Erkennungsfeld eines Erkennungsorgans (23), das auf dem ersten Teil (1) angeordnet ist,
und dadurch, dass das zweite Teil (2) Mittel zum Verschieben (19) des Aktivierungsorgans (22) des Positionssensors gegenüber dem Erkennungsorgan (23) aufweist, die den Übergang des Aktivierungsorgans (22) von einer neutralen Position in die Erkennungsposition ermöglichen, wobei die Mittel zum Verschieben (19) während des dichten Koppelns des zweiten Teils der Verbindungsvorrichtung an die Mittel zum Aufnehmen betätigt werden,
und dadurch, dass die Mittel zum Verschieben in Form einer Blattfeder (19) vorliegen, die in Höhe der Mittel zum Koppeln (18) mit den Mitteln zum Aufnehmen angeordnet ist, wobei das Aktivierungsorgan (22) auf dem Blatt (21) der Blattfeder montiert ist und die Feder (19) so angeordnet ist, dass sie bei dem dichten Koppeln an die Mittel zum Aufnehmen zusammengedrückt wird, um das Aktivierungsorgan (22) in die Erkennungsposition zu verschieben.

2. Verbindungsvorrichtung nach Anspruch 1, **dadurch gekennzeichnet, dass** das Betätigen des Sensors sein Verschieben in eine Erkennungsposition des dichten Koppelns des ersten Teils (1) mit dem zweiten Teil (2) bewirkt.

3. Verbindungsvorrichtung nach Anspruch 1 oder 2, **dadurch gekennzeichnet, dass** das Erkennungsorgan (23) so auf dem ersten Teil (1) angeordnet ist, dass wenn das zweite Teil (2) dicht mit den Mitteln zum Aufnehmen gekoppelt ist, die Mittel zum Verschieben (19) das Aktivierungsorgan (22) in die Erkennungsposition auf den Erkennungsabstand des Erkennungsorgans (23) verschieben.

4. Verbindungsvorrichtung nach Anspruch 1 bis 3, **dadurch gekennzeichnet, dass** die Blattfeder (19) einen ringförmigen Teil (20) mit einem Blatt (21) aufweist, das sich so von einem Rand nach innen erstreckt, dass ein freies Ende vorliegt, das sich innerhalb einer Zone befindet, die durch den ringförmigen Teil (20) der Feder definiert ist, wobei das freie Ende das Aktivierungsorgan (22) aufnimmt.

5. Verbindungsvorrichtung nach Anspruch 4, **dadurch gekennzeichnet, dass** das zweite Teil (2) einen beweglichen Teil (15) aufweist, der auf der Höhe der Mittel zum Koppeln (18) mit den Mitteln zum Aufnehmen angeordnet ist und dazu dient, während des dichten Koppelns mit den Mitteln zum Aufnehmen relativ in Richtung der Feder (19) bewegt zu werden, wobei der bewegliche Teil (15) eine ringförmige Schulter (16) aufweist, deren der Feder (19) zugewandte Umfangskante abgeschrägt ist und geeignet ist, während des Verschiebens (15) des beweglichen Teils, gegen den ringförmigen Teil (20) der Blattfeder (19) zu drücken, um der Feder (19) eine konkave Verformung zuzufügen, mit Gegenauflage gegen einen ringförmigen Auflagebereich (18a), der auf dem zweiten Teil (2) angeordnet ist und die gleiche Neigung aufweist, wie die abgeschrägte Schulter (16), damit das Blatt (21) der Feder (19) das Aktivierungsorgan (22) in die Erkennungsposition verschiebt.

6. Verbindungsvorrichtung nach einem der Ansprüche 1 bis 5, **dadurch gekennzeichnet, dass** das Aktivierungsorgan (22) in Form mindestens eines Magneten (22a) vorliegt.

7. Verbindungsvorrichtung nach Anspruch 6, **dadurch gekennzeichnet, dass** das Aktivierungsorgan (23) in Form mindestens eines Magnetschalters (13) vorliegt.

8. Vorrichtung, vorzugsweise zur Laboranalyse, die ein Produkt durch mindestens ein Rohr (T) ableitet, wobei das Produkt auf dichte Weise in Mitteln zum Aufnehmen des Produkts zurückgewonnen werden soll, **dadurch gekennzeichnet, dass** sie eine Verbindungsvorrichtung nach einem der Ansprüche 1 bis 7 aufweist, deren erstes Teil (1) dicht mit dem Ableitungsrohr (T) des Produkts verbunden ist.

9. Vorrichtung, vorzugsweise zur Laboranalyse, die ein Produkt auf dichte Weise in Mittel zum Aufnehmen des Produkts über mindestens ein Ableitungsrohr (T) ableitet, **dadurch gekennzeichnet, dass** sie eine Verbindungsvorrichtung nach einem der Ansprüche 1 bis 7 aufweist, deren erstes Teil (1) dicht mit dem Ableitungsrohr (T) des Produkts verbunden ist und deren zweites Teil (2) dicht mit den Mitteln zum Aufnehmen gekoppelt ist.

10. Mittel zum dichten Aufnehmen eines Produkts, das über mindestens ein Ableitungsrohr (T) einer Vorrichtung, vorzugsweise zur Laboranalyse, und einer Vorrichtung nach den Ansprüchen 1 bis 7 abgeleitet werden soll,
**dadurch gekennzeichnet, dass** die Mittel zum Aufnehmen des Produkts dicht mit dem zweiten Teil (2) einer Verbindungsvorrichtung nach einem der Ansprüche 1 bis 7 gekoppelt sind.

11. Mittel zum dichten Aufnehmen eines Produkts und Vorrichtung nach Anspruch 10, **dadurch gekennzeichnet, dass** sie in Form einer Bearbeitungseinheit vorliegen, die geeignet ist, das abgeleitete und aufgenommene Produkt zu bearbeiten.

12. Mittel zum dichten Aufnehmen eines Produkts und Vorrichtung nach Anspruch 10, **dadurch gekennzeichnet, dass** sie in Form eines Produktspeicherbehälters vorliegen, der ein dichtes geschlossenes Volumen definiert und einen Gewindehals aufweist.

## Claims

1. Device for tightly connecting at least one evacuation pipe (T) of a product with receiving means for receiving said product, said device comprising:
- a first part (1) comprising means (4) for tightly connecting to the pipe (T);
- a second part (2) comprising means (17,18) for tight coupling with the receiving means; said first and second parts are configured to be tightly coupled to each other and comprise complementary means (4, 5) allowing the evacuation of the product through said first and second parts, from the evacuation pipe (T) up to the receiving means, -
- **characterized in that** the second part (2) comprises a position sensor arranged to be actuated during the tight coupling to the receiving means and
- **in that** the position sensor comprises an activation member (22) arranged on the second part (2), said activation member being movable in a detection position only when the connecting device is tightly coupled to receiving means, in the direction and in the detection area of a detection member (23) arranged on the first part (1), and
- **in that** the second part (2) comprises displacement means (19) of the activation member (22) of the position sensor, against the detection member (23) of said position sensor, allowing the activation member (22) to pass from a neutral position to a detection position, said displacement means (19) being actuated during tight coupling to the receiving means, and
- **in that** the displacement means are in the form of a leaf spring (19) arranged at the coupling means (18) with the means receiving, the activating member (22) is mounted on the blade (21) of said spring, and the spring (19) is arranged to be compressed during the tight coupling to the receiving means so as to move the activation member (22) in the detection position.

2. Connection device according to claim 1, **characterized in that** the actuation of the sensor causes its displacement in a detection position of the tight coupling of the first part (1) with the second part (2).

3. Connection device according to claim 1 or 2, **characterized in that** the detection member (23) is arranged on the first part (1) so that when the second part (2) is coupled in a tight manner to the receiving means, the displacement means (19) move the activation member (22) in the detection position, at the detection distance from said detection member (23).

4. Connection device according to any of the claims 1 to 3, **characterized in that** the leaf spring (19) has an annular part (20) with a leaf (21) extending internally from an edge, so as to have a free end situated at inside a zone defined by the annular part (20) of the spring, said free end receiving the activation member (22).

5. Connection device according to claim 4, **characterized in that** the second part (2) comprises a movable part (15) arranged at the level of the coupling means (18) with the receiving means and configured to be moved relatively in the direction of the spring (19) during the tight coupling to said receiving means, the movable part (15) comprises an annular shoulder (16) whose peripheral edge facing the spring (19) is beveled and is suitable, during displacement of the movable part (15), to come into abutment against the annular part (20) of the leaf spring (19) to apply to said spring (19) a concave deformation, in abutment against an annular support part (18a) formed on the second part (2) and having the same slope as the beveled shoulder (16), so that the blade (21) of the spring (19) moves the activation member (22) in the detection position.

6. Connection device according to any one of claims 1 to 5, **characterized in that** the activation member (22) is in the form of at least one magnet (22a).

7. Connection device according to claim 6, **characterized in that** the detection member (23) is in the form of at least one magnetic switch (13).

8. Apparatus, preferably for laboratory analysis, evacuating a product through at least one pipe (T), said product being configured to be retrieved, in a tight manner, in receiving means for receiving said product, **characterized in that** it comprises a connection device according to any one of claims 1 to 7, the first part (1) of which is tightly connected to the evacuation pipe (T) of the product.

9. Apparatus, preferably for laboratory analysis, evacuating a product in a tight manner in means for receiving said product via at least one evacuation pipe (T), **characterized in that** it comprises a device for connection according to any one of claims 1 to 7, the first part (1) of which is tightly connected to the product evacuation pipe (T) and the second part (2) of which is tightly coupled to the means reception.

10. Means for tight reception of a product intended to be evacuated by at least one pipe (T) from an apparatus, preferably for laboratory analysis, and device according to claims 1 to 7, **characterized in that** said product reception means are coupled in a tight manner to the second part (2) of the connection device according to any one of claims 1 to 7.

11. Means for tight reception of a product and device according to claim 10, **characterized in that** they are in the form of a treatment unit capable of treating the evacuated and received product.

12. Means for tight reception of a product and device according to claim 10, **characterized in that** they are in the form of a product storage tank defining a tight closed volume and comprising a threaded neck.
